# EUROPEAN PATENT APPLICATION

(11) **EP 4 775 473 A1**
(43) Date of publication of application: **15.07.2026**
(21) Application number: 25151555.7
(22) Date of filing: 13.01.2025
(51) Int. Cl.: B62D 5/09

(54) **STEERING CONTROL SYSTEM FOR HYDRAULIC STEERING SYSTEM WITH A TORQUE SENSOR FOR SENSING TORQUE APPLIED TO A STEERING INPUT DEVICE AND HYDRAULIC STEERING SYSTEM**

(71) Applicant: Danfoss Power Solutions ApS, 6430 Nordborg (DK)
(72) Inventor: Bauer, Thomas, 6430 Nordborg (DK); Lykke Lomholt, Rasmus, 6430 Nordborg (DK); Hoeck Petersen, Morten, 6430 Nordborg (DK)
(74) Representative: Keil & Schaafhausen Patentanwälte PartGmbB

(57) **Abstract**

The invention relates to a steering control system (3) for a hydraulic steering system (1) with a steering cylinder (2), wherein the steering control system (3) comprises a steering input device (10) operable by an operator for inputting steering commands and a flow adjustment assembly (20) for controlling hydraulic fluid (HFS) supply to the steering cylinder (2) based on the steering commands. In order to provide more precise and comfortable steering, the steering control system (3) comprises a torque sensor (13, 15) for sensing torque applied to the steering input device (10), wherein the steering control system (3) is configured to control the flow adjustment assembly (20) based on a torque sensor output (TSO) of the torque sensor (13, 15). The invention further relates to a hydraulic steering system (1).

## Description

The invention relates to a steering control system for a hydraulic steering system with a steering cylinder, wherein the steering control system comprises a steering input device operable by an operator for inputting steering commands and a flow adjustment assembly for controlling hydraulic fluid supply to the steering cylinder based on the steering commands. The invention further relates to a hydraulic steering system for a vehicle.

Various types of hydraulic steering systems are known. A steering command finally results in a change of a wheel angle of steerable wheels of a vehicle with respect to a longitudinal axis of the vehicle, thereby changing a direction of movement of the vehicle.

Some hydraulic steering systems employ electrohydraulic valves (e.g. fail-safe electrohydraulic steering systems with emergency braking, hybrid steering systems employing a traditional hydraulic steering unit with at least one metering pump and an electrohydraulic valve assembly, and steer-by-wire systems employing redundant electrohydraulic valves).

An exemplary hydraulic steering system is, for example, shown in Figure 1 of DE 10 2007 053 024 A1. Some modifications are described in EP 2 762 387 A1. The hydraulic steering system comprises a (traditional) hydraulic steering unit and additionally an electrohydraulic valve assembly that allows for electronically controlled hydraulic steering (electrohydraulic steering). A steering cylinder can be actuated by the electronic valve assembly and by the hydraulic steering unit.

Typically, in such hydraulic steering systems, an activation of a steering input device drives at least one proportional electrohydraulic valve.

The known closed-loop electrohydraulic steering systems require activating the steering input device, either by rotation (in the case of a steering wheel) or by deflection (in the case of a joystick) into an active set-point range to generate a flow set-point change. An adequately control error must be robustly detected in noisy conditions before a down-stream control system can regulate the steering system, e.g. by operating the electrohydraulic valve. As a maximum speed of a vehicle increases towards and beyond 60 km/h, a control lag will become a problem for a directional steering stability.

Typically, the proportional electrohydraulic valve itself has a valve deadband. This means that a valve spool of the electrohydraulic valve has to be displaced away from a neutral/middle position by at least a minimum distance before any hydraulic fluid supply to the steering cylinder starts. This also contributes to a delayed and less precise reaction of the hydraulic steering system to steering commands applied by the operator, at least in some situations.

The object underlying the invention is to provide more precise and comfortable steering.

This problem is solved by a steering control system with the features according to claim 1.

It is a steering control system for a hydraulic steering system with a steering cylinder.

The steering control system comprises:
a steering input device operable by an operator for inputting steering commands; and a flow adjustment assembly for controlling hydraulic fluid supply to the steering cylinder based on the steering commands.

Further, the steering control system comprises a torque sensor for sensing torque applied to the steering input device (e.g. by the operator), wherein the steering control system is configured to control the flow adjustment assembly based on a torque sensor output of the torque sensor.

Using the torque sensor output and hence the measured torque applied to the steering input device, e.g. by the operator, this measured torque can be used as indicating a steering intention without requiring the steering device to be moved, at least without being significantly moved (e.g. by rotating a steering wheel). The steering intention of the operator can be captured and taken action on. This allow precision steering by capturing and reacting on the steering intention without requiring the steering device (steering wheel, joystick) to be moved, turned and/or deflected outside a control deadband of the steering input device.

The measured steering intention (in the form of the applied torque on the steering input device) can be used to steer out (at least) a small amount of flow of hydraulic fluid to the steering cylinder, e.g. in order to actuate the steering cylinder to turn the wheels towards the steering direction in accordance with the measured steering intention (i.e. in accordance with a direction of the measured torque). This allows taking action on very small steering commands timely because the spool is pre-positioned to the steering direction which is likely to be used next if further steering inputs are given by the operator.

The torque sensor output provides relevant input data regarding the steering input device even when the steering input device is not actively moved by the operator (e.g. by rotating the steering wheel) but merely leaned towards the side (i.e. the steering direction) to which the vehicle shall steer.

The torque sensor, or torque sensing technique, is a means to provide input data to a valve spool controller by measuring the operator's steering intention without depending on an active steering device movement (e.g. by rotating the steering wheel). This establishes a torque steering operation mode which can be employed to either position the valve spool on the deadband or generate small steering commands into the intended direction before the steering device is subsequently actively operated (e.g. by rotating the steering wheel). As a result of the torque steering mode, the valve spool position set-point can be pre-loaded to deliver promptly additional flow to the intended direction without a prior spool deadband jump. This will contribute in minimizing the steering control lag.

With the disclosed approach, very subtle steering commands can be measured and taken action on. According to a further aspect, there may be no need to command a new set-point to build up an error in a closed-loop system to be reacted on. This reactive principle is also known to result in lag.

The present invention allows for more precise, more comfortable, and better controllable steering, it allows for implementing new functionalities, it improves the performance of the hydraulic steering system (e.g. the reaction time of the hydraulic steering system when the operator starts to manipulate the steering input device). It is a cost-efficient and easily implementable solution. It can further increase the reliability, safety, and accessibility of the hydraulic steering system.

The hydraulic control system can be applied, for example, in fail-safe electrohydraulic steering systems with emergency braking, in hybrid steering systems employing a traditional hydraulic steering unit with at least one metering pump and an electrohydraulic valve assembly, and in steer-by-wire systems employing redundant electrohydraulic valves.

The steering input device can include at least one of a steering wheel and a steering shaft. The torque sensor can be coupled to the at least one of the steering wheel and the steering shaft. Naturally, the steering input device can include the steering shaft and the steering wheel coupled to the steering shaft.

The steering input device can include a joystick. The torque sensor can be coupled to the joystick. Especially, the joystick may include the torque sensor.

The steering control system may include several torque sensors. For example, it may include a redundant torque sensor for the torque sensor mentioned above. Additionally or alternatively, it may include torque sensors for different steering commands.

For example, the steering control system includes both the joystick and the at least one of the steering shaft and the steering wheel, wherein one of the torque sensors is coupled to the one of the steering shaft and the steering wheel and another one of the torque sensors is coupled to the joystick.

The joystick may include at least one torque sensor for sensing sideward torques applied to the joystick (corresponding to leaning the joystick leftwards/rightwards). The joystick may include at least one torque sensor for measuring forward/backward torques (corresponding to leaning the joystick forwards/backwards). The combination allows proper measurement of torques related to different steering commands.

According to one aspect, the flow adjustment assembly includes at least one proportional valve. The at least one proportional valve may be configured for adjusting the hydraulic fluid supply to the steering cylinder. The proportional valve allows precise and well-predictable adjustment of the hydraulic fluid supply.

In one embodiment, the flow adjustment assembly includes an electrohydraulic valve assembly for electrohydraulic steering. Additionally or alternatively, the flow adjustment assembly may include a hydraulic steering unit with at least one metering pump.

The electrohydraulic valve assembly may include at least one electrohydraulic valve, e.g. at least one proportional electrohydraulic valve (e.g. the at least one electrohydraulic valve can be the at least one proportional valve). Of course, the electrohydraulic valve assembly can include several electrohydraulic valves. One of them, some of them, or all of them may be proportional valves.

In one embodiment, the steering control system include a movement sensor (at least one movement sensor) coupled to the steering input device for measuring movements applied to the steering input device. Said movement sensor may can be a positional sensor, e.g. for sensing a rotational position of the steering wheel and/or the steering shaft or for sensing a deflection of a joystick.

The steering control system may include several movement sensors. For example, it may include a redundant movement sensor for the movement sensor mentioned above. Additionally or alternatively, it may include movement sensors for different steering commands.

For example, if the steering input includes the joystick, the joystick may include at least one movement sensor for sensing sideward deflection of the joystick (corresponding to deflecting the joystick leftwards/rightwards). The joystick may include at least one movement sensor for measuring forward/backward deflection (corresponding to deflecting the joystick forwards/backwards). This allows proper measurement of movements/movement speeds related to different steering commands.

The torque sensor(s) and/or the movement sensor(s) can form part of the steering input device.

According to one aspect, the steering control system may include a controller, e.g. an electronic controller. The controller may be operatively connected to the to the torque sensor(s). The controller may be operatively coupled to the flow adjustment assembly, e.g. at least to the electrohydraulic valve assembly. The at least one electrohydraulic valve and/or the at least one proportional valve may be operable by the controller. The controller may be operatively connected to the movement sensor(s). The controller may be configured to control one of, several of, or all of the operations of the steering control system that are described.

The steering input device and/or the flow adjustment assembly may include the controller.

In one embodiment, the steering control system, e.g. the controller, is configured to operate the flow adjustment assembly based on the torque sensor output of the torque sensor(s) in a control deadband for the movement sensor(s). As noted above, an adequately control error regarding the movement sensor(s) must be robustly detected in noisy conditions before the controller can regulate the flow adjustment assembly, e.g. by operating the electrohydraulic valve assembly. However, even small steering commands within the deadband can be considered and used for applying corresponding small hydraulic fluid supplies and/or for corresponding pre-loading of the flow adjustment assembly based on the torque sensor output that indicates the torques applied by the operator to the steering input devices within the control deadband for the movement sensor(s).

The steering control system, e.g. the controller, can be configured to operate the flow adjustment assembly based on a movement sensor output of the movement sensor when the movement sensor output is indicative of a certain minimum input movement and/or a certain minimum input movement speed of the steering input device. The input movement may mean the movement of the relevant part(s) of the steering input device caused by the steering command applied by the operator. The movement speed may correspond to the speed of said movement (e.g. an angular speed and/or a deflection speed).

The control deadband for the movement sensor may be limited by the certain minimum input movement and/or the certain minimum input movement speed. The control deadband is exceeded when the input movement and/or the movement input speed exceeds said control deadband (e.g. due to a more excessive leftward steering command or a more excessive rightward steering command). Especially, the steering control system (e.g. the controller) can be configured to control the flow adjustment assembly without the torque sensor output of the torque sensor when the movement sensor output is indicative of at least the certain minimum input movement and/or at least the certain minimum input movement speed of the steering input device (i.e. when the movement sensor output indicates that the present steering command exceeds the control deadband for the movement sensor).

For example, the steering control system (e.g. the controller) may be configured to command/operate the flow adjustment assembly, e.g. the at least one proportional and/or electrohydraulic valve, based on the movement sensor output in a movement control region and based on the torque sensor output in a torque control region. For example, the movement control region may apply when the input movement of the steering input device exceeds the certain minimum input movement and/or when the input movement speed of the steering input device exceeds the certain minimum input movement speed. When this is not the case, the torque control region may apply. In other words, the torque control region may correspond to the control deadband for the movement sensor.

According to one aspect, the flow adjustment assembly can have a valve deadband. For example, the at least one proportional valve, the at least one electrohydraulic valve, and/or the hydraulic steering unit can have a valve deadband.

In one embodiment, the flow adjustment assembly includes at least one valve spool (e.g. a valve spool of the at least one hydraulic valve and/or a valve spool of the hydraulic steering unit). The valve spool can have the valve deadband.

According to one aspect, the steering control system (e.g. the controller) can be configured to command (e.g. in the torque control zone) the flow adjustment assembly to skip/bridge at least a part of the valve deadband based on the torque sensor data.

In one embodiment, the steering control system (e.g. the controller) can be configured to instantaneously command the flow adjustment assembly away from its neutral position based on the torque sensor data (especially in the torque control zone).

For example, the steering control system (e.g. the controller) may be configured to instantaneously command the flow adjustment assembly outside the valve deadband (e.g. from the neutral position) to output at least a minimum hydraulic fluid supply to the steering cylinder when the toque sensor output indicates that the torque applied to the steering input device corresponds to at least a certain torque threshold (referred to as steering torque threshold). In more detail, in the torque control zone, when the toque sensor output indicates that an absolute value of the torque applied to the steering input device exceeds the steering torque threshold, the flow adjustment assembly is commanded to outside the valve deadband in order to output at least the minimum hydraulic fluid supply to the steering cylinder towards the respective steering direction indicated by the sensed torque. For example, the valve spool may be commanded to outside the valve deadband.

In other words, "pre-loading" to outside the valve deadband (resulting in actual hydraulic fluid supply to the steering cylinder) can be performed based on the torque sensor data.

Hence, the steering control system allows that the (at least the relevant element(s) of the) flow adjustment assembly "skips" the valve deadband (directly "jumps out" of the valve deadband). This results in particularly direct and spontaneous reaction of the hydraulic steering system when the operator starts to apply sufficient torque to the steering input device. This is even beneficial if the operator then moves the steering input device further (e.g. significantly turns the steering wheel or deflects the joystick) such that the certain minimum input moment and/or the certain minimum input movement speed is exceeded thereafter: The hydraulic fluid supply can be increased then based on the movement sensor output without the need for overcoming the valve deadband first.

Additionally or alternatively, the steering control system (e.g. the controller) is configured to pre-load the flow adjustment assembly within the valve deadband based on the torque sensor data. As an example, the steering control system (e.g. the controller) can be configured to pre-load the valve spool away from its neutral position, based on the torque sensor output. Especially, the steering control system can pre-load the flow adjustment assembly (for example the valve spool) based on the torque sensor output to an end of the valve deadband at the steering direction indicated by the torque sensor output. In this context, the ends of the valve deadband may be considered to be still part of and hence "within" the valve deadband.

In other words, pre-loading within the valve deadband (without resulting in hydraulic fluid supply to the steering cylinder), e.g. to an end of the valve deadband, can be performed based on the torque sensor data.

This still allows to shorten the reaction time of the hydraulic steering system in the case that a more excessive steering command of the operator follows (e.g. with the steering command applied to the steering input device exceeding the certain torque threshold, the certain minimum input movement, and/or the certain minimum input movement speed then). Said end of the valve deadband may correspond to the same steering direction as a direction of the sensed torque, respectively. However, the mere pre-loading within the valve deadband as such does not yet result in any hydraulic fluid supply to the steering cylinder. This can be beneficial to use particularly low sensed torques only for the pre-loading within the valve deadband but not for causing any actual steering in order to avoid that the operator gets the impression of the steering control system being hypersensitive.

For example, there can be a pre-load torque threshold and the pre-loading within the valve deadband can be performed (in the torque control region) when the toque sensor output indicates that the torque applied to the steering input device exceeds a pre-load torque threshold. The pre-load torque threshold could be zero. Accordingly, any sensed torque different with the absolute value larger than zero in the torque control region will result in pre-loading of the flow adjustment assembly (towards the respective steering direction indicated by the sensed torque). Naturally, the pre-load steering torque can be larger than zero as well.

The relevant may be automatically returned to its neutral position when (the absolute value of) the sensed torque falls below the pre-load steering torque, remains below the pre-load steering torque for at least a certain time period, and/or changes the steering direction (e.g. indicated by the sign of the value) while not exceeding the pre-load steering torque towards the new steering direction.

In the case that there is the steering torque threshold (for jumping to outside the valve deadband) in combination with the pre-load torque threshold (for pre-loading within the valve deadband), the pre-load torque threshold may be smaller than the steering torque threshold. When, in the torque control zone, the toque sensor output indicates that the absolute value of the torque applied to the steering input device exceeds the pre-load torque threshold but is smaller than the steering torque threshold, the flow adjustment assembly is pre-loaded within the valve deadband towards the respective steering direction indicated by the sensed torque. When, in the torque control zone, the toque sensor output indicates that the absolute value of the torque applied to the steering input device corresponds to at least the steering torque threshold, the flow adjustment assembly is commanded to outside the valve deadband in order to output at least the minimum hydraulic fluid supply to the steering cylinder towards the respective steering direction indicated by the sensed torque.

According to one aspect, the steering control system (e.g. the controller) is configured to command the flow adjustment assembly to increase the hydraulic fluid supply to the steering cylinder over the minimum hydraulic fluid supply depending on the torque sensor output when the torque sensor output indicates that the torque applied to the steering input device is beyond the steering torque threshold (the absolute value is larger than the steering torque threshold). Hence, the steering control system allows gradual steering even within the torque control zone based on the torque sensor output (for example depending on how strong the operator leans the steering wheel / joystick to one side without this being sufficient to change to the movement control zone).

In one embodiment, the torque sensor includes a torsion spring that is configured to by deflected when the operator inputs a torque to the steering input device. For example, the torsion spring may couple a first part of the steering shaft (at a side with the steering wheel) and a second part of the steering shaft (at a side opposite to the steering wheel). A first sensor part may be coupled to the first part of the steering shaft and a second sensor part may be coupled to the second part of the steering shaft. The entirety of the sensor outputs of the first sensor part and the second sensor part may be indicative of relative rotation of the first part of the steering shaft with respect to the second part of the steering shaft. This allows for an easily and yet reliable implementation of a suitable torque sensor. Especially, at least one of the first positional part and the second sensor part might be a positional sensor and be the movement sensor, too. This introduces an additional synergistic effect.

According to one aspect, the steering control system may include an electric motor coupled to the steering input device. The steering control system can be configured to use the electric motor as the torque sensor. Additionally or alternatively, the steering control system may be configured to use the electric motor to provide a certain resistance against input movements (i.e. to hold the steering wheel in a present rotational position unless a torque applied to the steering wheel by the operator exceeds a certain threshold). Additionally or alternatively, the electric motor is for providing force feedback to the operator (via the steering input device). The steering control system can be configured to use the electric motor for providing force feedback to the operator in some but not all operational modes of the steering control system. The disclosed approaches allow a synergistic use of the electric motor.

According to one aspect, the steering control system, e.g. the controller, is configured to rely on the torque sensor for sensing steering commands when the movement sensor fails. Additionally or alternatively, the steering control system can be configured to rely on the movement sensor for sensing steering commands when the torque sensor fails.

In one embodiment, the steering control system is configured to use the torque sensor output of the torque sensor as a feed-forward portion in a closed-loop control functionality for controlling the hydraulic fluid supply to the steering cylinder, at least in the torque control region.

In an open-loop flow control system, the toque sensor output may come into play before the steering input device is (at least significantly) moved.

In one embodiment, the steering control system, e.g. the controller, is configured to cross-check the torque sensor output and the movement sensor output. It may be configured to determine malfunctions/errors based on cross-checking the sensor output and the movement sensor output. For example, if the torque sensor output indicates that the operator applies a high torque to the steering input device while the movement sensor output does not indicate any (significant) movement and/or movement speed of the steering input device, this might indicate a malfunction/error. Vice versa, if the movement sensor output indicates a large movement and/or a high movement speed of the steering input device while the torque sensor output does not indicate any (significant) torque applied to the steering input device by the operator, this can indicate a malfunction/error.

The steering control system, e.g. the controller, may be configured to switch to an emergency mode if it determines the malfunction/error. Additionally or alternatively, it may be configured to provide a warning to the user (e.g. a visual, audible, and/or tactile warning).

The steering control system can include a wheel angle sensor. It can be connected to the controller. The steering control system, in particular the controller, can be configured to use the wheel angle sensor for the closed-loop control functionality.

The problem mentioned above is further solved by a hydraulic steering system for a vehicle with the features according to claim 15.

The steering system includes at least one steering cylinder and a steering control system according to the invention, wherein the at least one steering cylinder is fluidly connected to the flow adjustment assembly.

The embodiments, modifications, and advantages described with respect to the steering control system may apply accordingly with respect to the steering system, and vice versa.

The steering system may further include a fluid supply unit for providing pressurized hydraulic fluid. The fluid supply unit may be fluidly connected to the flow adjustment assembly. It may include at least one pump for the hydraulic fluid.

Additional features, advantages and possible applications of the invention result from the following description of exemplary embodiments and the drawings. All the features described and/or illustrated graphically here form the subject matter of the invention, either alone or in any desired combination, regardless of how they are combined in the claims or in their references back to preceding claims.

Preferred embodiments of the invention will now be described with reference to the drawings, in which:
- Fig. 1: schematically shows an embodiment of a hydraulic steering system for a vehicle with a steering control system according to the present invention, wherein a torque sensor is coupled to a steering shaft of a steering input device;
- Fig. 2: schematically shows a modification of the hydraulic steering system shown in Fig. 1, wherein an electric motor coupled to the steering shaft is used as the torque sensor;
- Fig. 3A: schematically shows how a proportional valve of a flow adjustment assembly of the steering control system shown in Figs. 1 and 2 is operated based on a torque sensor output from the torque sensor in a torque control region and based on a movement sensor output from a movement sensor in a movement sensor region in order to adjust a hydraulic fluid supply to a steering cylinder;
- Fig. 3B: schematically shows a dependency of the hydraulic fluid supply from a sensed torque that is applied by the operator to the steering shaft in the torque control region;
- Fig. 4: schematically shows a closed-loop control functionality of the steering control system shown in Figs. 1 and 2; and
- Fig. 5: shows another modification of the hydraulic steering system shown in Fig. 1, wherein the steering input device includes a joystick.

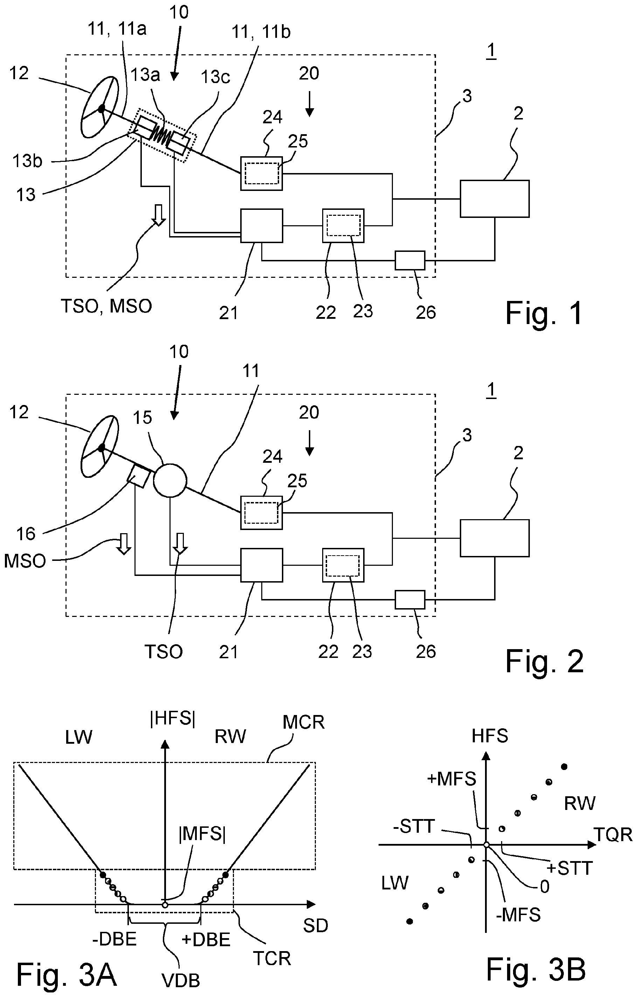

Fig. 1 shows a hydraulic steering system 1 for a vehicle. The hydraulic steering system 1 comprises a steering cylinder 2 and a steering control system 3.

The steering control system 3 includes a flow adjustment assembly 20 that is fluidly connected to the steering cylinder 2. The steering cylinder 2 is actuatable by hydraulic fluid supply HFS (see Fig. 3) from the flow adjustment assembly 20.

Further, the steering control system has a steering input device 10. The steering input device 10 is operable by an operator to input steering commands. The steering control system 3 is configured to control/operate the flow adjustment assembly 20 and hence to actuate the steering cylinder 2 based on the steering commands.

In Figs. 1 and 2, the steering input device 10 includes a steering shaft 11 and a steering wheel 12 that is coupled to the steering shaft 11. The operator can turn the steering wheel 12 leftward (counterclockwise in the perspective of the operator) to input leftward steering commands and rightward (clockwise in the perspective of the operator) to input rightward steering commands.

In the exemplary embodiments, the flow adjustment assembly 20 includes a controller 21 and an electrohydraulic valve assembly 22 that is operated (controlled by) the controller 21 based on the steering commands. The electrohydraulic valve assembly 22 includes at least one electrohydraulic proportional valve 23. Further, the flow adjustment assembly 20 has a traditional hydraulic steering unit 24 with at least one metering pump 25. In Figs. 1 and 2, the hydraulic steering unit 24 is mechanically coupled to the steering input device 10, in more detail to the steering shaft 11.

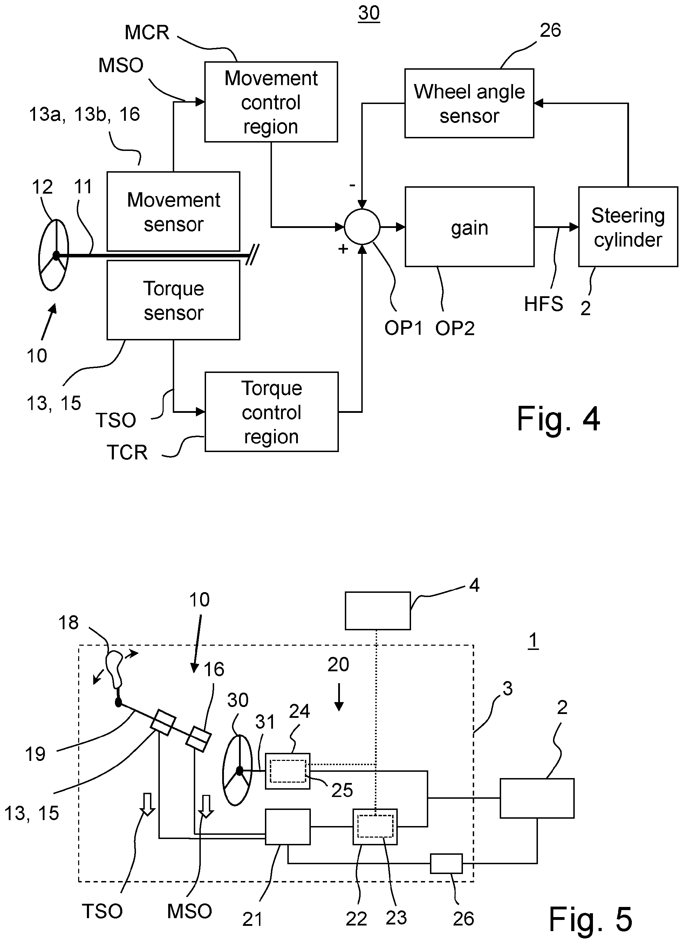

The hydraulic steering system 1 further includes a hydraulic supply unit 4 with a pump for supplying pressure hydraulic fluid to the flow adjustment assembly 20, in more detail to both the electrohydraulic valve assembly 22 and the hydraulic steering unit 24. This is explicitly shown only in Fig. 5 but may be implemented in Figs. 1 and 2 in the same manner.

The electrohydraulic valve assembly 22 and the hydraulic steering unit 24 are both hydraulically coupled to the steering cylinder 2. This allows for redundancy and for "converting" steering commands of different kinds and in received in different ways into suitable hydraulic fluid supply to the steering cylinder 2. For example, the steering cylinder 2 may include two cylinder chambers at opposite sides of a piston rod that may be selectively provided with pressurized hydraulic fluid in order to move the piston rod, e.g. for changing a wheel angle of wheels of the vehicle (not shown).

The electrohydraulic valve assembly 22 may be actuatable based on other steering commands than discussed herein, e.g. based on electronic steering commands provided from an autopilot, a navigation system, and/or a remote control.

The steering shaft 11 forwards the (mechanical) steering commands applied by the operator via the steering wheel 12 to the hydraulic steering unit 24. The hydraulic steering unit 24 may be configured to allow for manual pumping of the hydraulic fluid for the steering cylinder 2 via the steering wheel 12 in an emergency mode, e.g. if the fluid supply unit 4 fails.

In Fig. 1, the steering control system 3 comprises a torque sensor 13 coupled to the steering shaft 11. The torque sensor 13 includes a resilient element, e.g. a torsional spring 13b, that resiliently rotationally couples a first part 11a of the steering shaft 11 and a second part 11b of the steering shaft 11. The steering wheel 12 is rotationally fixed to the first part 11 a and the second part 11b is coupled to the hydraulic steering unit 24.

Due to the resilient element (the torsional spring 13b), the first part 11a can elastically rotationally displace with respect to the second part 11b, at least to a certain extent. The resilient element hence enables measuring when a torque is applied on the steering wheel 12 by the operator.

When the operator applies the torque via the steering wheel 12 (e.g. a leftward torque or a rightward torque), the first part 11a of the steering shaft 11 rotationally displaces with respect to the second part 11b of the steering shaft 11 in an elastic manner. This can be caused by a resistance of the second part 11b and the elements in the hydraulic steering unit 24 rotationally coupled to the latter and/or by mass inertia of the second part 11b and the elements in the hydraulic steering unit 24 rotationally coupled to the latter.

The torque sensor 13 includes a first sensor part 13a coupled to the first part 11a of the steering shaft 11 and a second sensor part 13c coupled to the second part 11b of the steering shaft 11.

Rotational positions of the shaft parts 11a, 11b on both sides of the resilient element (e.g. the torsional spring 13b) are measured. The first sensor part 13a measures the rotational position of the first part 11a of the steering shaft 11. The second sensor part 13c measures the rotational position of the second part 11b of the steering shaft 11b. A difference of the rotational positions represents the torque applied to the steering input device 10by the operator, in this example via the steering wheel 12.

For example, each of the rotational positions can be determined by measuring a corresponding magnetic field orientation, wherein the respective magnetic field orientation is rotationally fixed with respect to the corresponding part 11a, 11b of the steering shaft 11. When the operator does not apply any torque via the steering wheel 12, the two magnetic field orientations are aligned (parallel). When the operator applies a torque to the steering wheel 12 and hence to the first part 11a, this will displace the two magnetic field orientations relative to each other in either right or left direction.

In more detail, the magnetic field orientation rotationally fixed to the first part 11a will displace, with respect to the magnetic field orientation rotationally fixed to the second part 11b, leftward when the user applies a leftward torque TQR (left side in Figs. 3A and 3B as indicated by "LW" for "leftward"; in Fig. 3B the torques TQR with negative values are leftward torques) and rightward when the user applies a rightward torque (see right sides in Figs. 3A and 3B as indicated by "RW" for "rightward"; in Fig. 3B, the torques TQR with positive values are rightward torques TQR). This torque TQR can be taken action on as described with respect to Figs. 3A and 3B.

The first sensor part 13a and the second sensor part 13c are connected to the controller 21. A torque sensor output TSO, in this case the entirety of the sensor outputs from the first sensor part 13a and the second sensor part 13c, is indicative of the torque TQR (see Fig. 3B) that is applied by the operator to the steering input device 10.

In particular, the torque sensor 13 and/or the controller 21 might calculate the applied torque TQR based on the torque sensor output TSO, for example by first calculating the difference of the two rotational positions indicated by the sensor outputs from the first sensor part 13a and the second sensor part 13c and then calculating the applied torque TQR based on said difference.

Further, at least one of the first sensor part 13a and the second sensor part 13c can be used as "movement sensor". For example, the steering control system 3 uses the first sensor part 13a as the movement sensor. The first sensor part 13a senses the rotational (angular) position of the first part 11a of the steering shaft 11 and hence a rotational (angular) position of the steering wheel 12. Input movements applied to the steering input device 10 by the operator as steering commands can be measured, e.g. by determining how much the relevant rotational position changes. Alternatively or in addition, input movements speeds can be determined by calculating the change of the relevant rotational position per time unit. Hence, the sensor output for the first sensor part 13a on the one hand forms part of the torque sensor output TSO and on the other hand can be a movement sensor output MSO, too.

Of course, a separate movement sensor (like the movement sensor 16 in Fig. 2) could be provided as well.

Further, in Fig. 2, an electric motor 15 is used as the torque tensor. The electric motor 15 is coupled to the steering shaft 11. In particular, a rotor of the electric motor 15 might even form part of the steering shaft 11. The electric motor 15 can be suitable for providing force feedback to the operator. The controller 21 might be configured to operate the electric motor 15 accordingly, at least under some circumstances.

A current used for the electric motor 15 for holding the steering wheel 12 in a certain (rotational) position, to provide some holding friction when not operated (e.g. by means of a closed-loop control system), will change if the operator applies a torque to either initiate a steering input movement or to nudge the steering direction to either side. Said change in the current is indicative of the applied torque TQR. This torque TQR can be taken action on as described with respect to Figs. 3A and 3B.

Apart from that, the hydraulic system 3 in Fig. 2 is the same as in Fig. 1 and the same reference signs are used.

Figs. 3A shows the hydraulic fluid supply HFS provided by the steering control system 3. The hydraulic fluid supply HFS is applicable and adjustable via the flow adjustment assembly 20 and may be provided to the steering cylinder 2 for actuating the latter.

In more detail, Fig. 3A shows the hydraulic fluid supply HFS that is supplied by the electrohydraulic valve assembly 22 depending on a spool displacement SD of a valve spool of the proportional valve 23. A middle / neutral position of the valve spool is where the y-axis (ordinate) touches the x-axis (abscissa). The proportional valve 23 has a valve deadband VDB. The valve deadband VDB has to ends, namely a leftward end at -DBE and a rightward end at + DBE. As long as the displacement of the valve spool is within the valve deadband VDB, i.e. as long as (an absolute value of) the spool displacement SD corresponds to DBE or less, no hydraulic fluid supply HFS occurs. This means the hydraulic fluid supply HFS is zero while the valve spool does not exceed the valve deadband VDB.

The spool displacement SD and hence the hydraulic fluid supply HFS are controlled by the controller 21 based on the torque sensor output TSO and the movement sensor output MSO. More exactly, in this non-limiting example, the controller 21 sets the spool displacement SD and hence the hydraulic fluid supply HFS (as provided by the electrohydraulic valve assembly 22) based on the torque sensor output TSO (which indicates the sensed torque TQR) in a torque control region TCR and based on the movement sensor output MSO in a movement control region MCR.

If the input movement speed corresponds to at least a certain minimum input movement speed, the movement control region MCR applies. In other words, if the operator turns the steering wheel 12 with at least the certain minimum input movement speed, the controller 21 switches to the movement control region MCR. As noted above, in the movement control region MCR, the controller 21 operates the spool displacement SD and hence controls the hydraulic fluid supply HFS based on the movement sensor output MSO. Just as an example, the hydraulic fluid supply HFS may depend linearly from the input movement speed. The movement sensor output MSO is indicative of the input movement speed. In general, for this, it is sufficient that the movement sensor output MSO is indicative of the input movements; the controller 21 might be able to calculate the input movement speed the input movement per time unit.

When the input movement speed is lower than the certain minimum input movement speed, the controller 21 does not operate the spool displacement SD based on the movement sensor output MSO and hence does not cause the flow adjustment assembly 20 to provide any hydraulic fluid supply HFS based on the movement sensor output MSO. In other words, when (an absolute value of) the input movement speed is lower than the certain minimum input movement speed, there is a "control deadband" for the movement sensor output MSO and hence for the movement sensor (e.g. the first sensor part 13a in Fig. 1 and the movement sensor 16 in Fig. 2). It is noted that negative input movement speeds may correspond to leftward steering commands (operator turns the steering wheel 12 counterclockwise) and positive input movement speed may correspond to rightward steering commands (operator turns the steering wheel 12 clockwise).

However, in this situation, the torque control region TCR applies and the controller 21 sets the spool displacement SD (and hence the hydraulic fluid supply HFS) based on the torque sensor output TSO - and hence based on the torque TQR that is applied by the operator to the steering input device 10. This is shown best in Fig. 3B.

When the torque control region TCR applies and when (an absolute value of) the sensed torque TQR is the same or larger than a steering torque threshold STT, the controller 21 operates the electrohydraulic valve assembly 22 in order to provide a hydraulic fluid supply HFS to the steering cylinder 2. In Fig. 3B, positive torques TQR indicate rightward torques and negative torques TQR indicate leftward torques. Naturally, the hydraulic fluid supply HFS is provided in accordance with the respective torque direction (leftward, see "LW" or rightward, see "RW').

In particular, in this example, when (the absolute value of) the sensed torque TQR corresponds to the steering torque threshold STT, a minimum hydraulic fluid supply MFS is provided for the respective steering direction. When (the absolute value of) the sensed torque TQR increases above the steering torque threshold STT, the hydraulic fluid supply HFS is increased accordingly beyond the minimum hydraulic fluid supply MFS. This allows for gradual steering based on the torque sensor output TSO in the torque control region TQR.

Naturally, when the torque TQR exceeds a certain upper threshold, the steering wheel 12 will be turned with at least the certain minimum input movement speed and hence the controller 21 will switch to the movement control range MCR (see Fig. 3A).

When the (absolute value of) the torque TQR is less than the steering torque threshold STT, no hydraulic fluid supply HFS is provided.

The idea is to let some initial hydraulic fluid supply HFS be commanded by the measured torque TQS. When no torque TQS is applied (when the steering input device 10 is in a rest state), no hydraulic fluid supply HFS is commanded. When the torque TQR corresponds to the steering torque threshold STT, the valve spool is instantaneously commanded outside the valve deadband VDB to output the minimum fluid supply MFS (for the corresponding steering direction). When the torque TQR is increased further, the valve spool is commanded further out (i.e. further away from the middle position), proportionally to the measured torque TQR. At some point, the steering input device 10 will begin to move significantly (e.g. the steering wheel 12 will start to rotate significantly or a joystick 18, see Fig. 5, will start to deflect significantly). From this point on, a spool set-point of the valve spool shall be generated based on the input movement speed (e.g. the rotations per minute of the steering wheel 12) and/or based on a (total) input movement of the with respect to an idle position (e.g. a deflection of the joystick 18); the torque measurement becomes obsolete/insignificant then.

The control based on the torque TQR (the torque control region TCR) is thus used in a transient period before the steering input device is moved such that the movement control range MCR starts to apply. The operator may also use the torque measurement feature to "nudge" a vehicle trajectory very little to a certain steering direction.

Alternatively or in addition, the controller 21 can be configured to operate the spool displacement SD in the torque control region TQR as follows: When (the absolute value of) the torque TQR exceeds a pre-load threshold, the spool displacement SD is set to the end -DBE, +DBE in the steering direction indicated by the torque TQR. The valve spool is pre-loaded to the respective side but no hydraulic fluid supply HFS is established yet. If the steering torque threshold STT is applicable as well, the pre-load torque threshold may be smaller than the steering torque threshold STT. When the steering command towards the same steering direction is getting more excessive such that the steering torque threshold STT is exceeded, such that the certain minimum input movement speed is exceeded, and/or such that the minimum input movement is exceeded, the valve spool has to move only slightly in order to start the hydraulic fluid supply HFS for said steering direction. The pre-loading hence improves the responsivity of the hydraulic steering system 1.

Fig. 4 schematically shows a basic closed-loop wheel angle control system 30 that is applicable for the shown hydraulic steering system 1. The steering input device 10 (e.g. with the steering wheel 12 as shown in Fig. 3 or the joystick 18 shown in Fig. 5) commands a wheel angle set-point. A control system regulates the wheel angle to the steering angle set-point (e.g. under control of the controller 21 shown in Figs. 1, 2 and 5). In the torque control region TCR, the torque sensor 13, 15 inputs a steering angle set-point in the form of a flow command as depicted in Figs. 3A and 3B. The flow command is directly resulting in a change of the wheel angle. The closed-loop control system 30 shall process the flow commands as a feed-forward contribution and obviously not observe the contribution as a control error to regulate on. Optionally, in the movement control region MCR, the movement sensor 13a, 13b, 16 inputs the steering angle set-point.

A wheel angle sensor 26 is used for the closed-loop control system 30. It can be connected to the controller 21 (see Figs. 1, 2, and 5).

The operations OP1 and OP2 can be performed by the hydraulic adjustment assembly 20, especially by the controller 21 and the electrohydraulic valve assembly 22 as explained above.

Fig. 5 shows a further modification of the hydraulic steering system 1 shown in Fig. 1. In this case, the steering input device 10 includes a joystick 18. The element 19 could a rotatable rod within the joystick 18 or a displaceable push rod within the joystick 18. Optionally, a steering wheel 30 may be mechanically coupled to the hydraulic steering unit 24. Similar as described above, the steering wheel 30 may allow for emergency steering by manually pumping the hydraulic fluid for the steering cylinder 2.

## Claims

1. A steering control system (3) for a hydraulic steering system (1) with a steering cylinder (2),
wherein the steering control system (3) comprises:
a steering input device (10) operable by an operator for inputting steering commands; and
a flow adjustment assembly (20) for controlling hydraulic fluid (HFS) supply to the steering cylinder (2) based on the steering commands;
**characterized in that** the steering control system (3) comprises a torque sensor (13, 15) for sensing torque applied to the steering input device (10), wherein
the steering control system (3) is configured to control the flow adjustment assembly (20) based on a torque sensor output (TSO) of the torque sensor (13, 15).

2. The steering control system (3) according to claim 1, wherein the flow adjustment assembly (20) includes at least one proportional valve (23, 25).

3. The steering control system (3) according any one of the preceding claims, wherein the flow adjustment assembly (20) includes an electrohydraulic valve assembly (22) for electrohydraulic steering and/or a hydraulic steering unit (24) with at least one metering pump (25).

4. The steering control system (3) according to any one of the preceding claims, wherein the steering control system (3) includes an electronic controller that is operatively connected to the flow adjustment assembly (20) and to the torque sensor (13, 15).

5. The steering control system (3) according to any one of the preceding claims, including a movement sensor (13a, 13b, 16) coupled to the steering input device (10) for measuring movements applied to the steering input device (10).

6. The steering control system (3) according to claim 5, wherein the steering control system (3) is configured to operate the flow adjustment assembly (20) based on the torque sensor output (TSO) of the torque sensor in a control deadband for the movement sensor (13a, 13b, 16).

7. The steering control system (3) according to any one of the claims 5 or 6, wherein the steering control system (3) is configured to operate the flow adjustment assembly (20) based on a movement sensor output (MSO) of the movement sensor (13a, 13b, 16) when the movement sensor output (MSO) is indicative of a certain minimum input movement and/or a certain minimum input movement speed of the steering input device (10).

8. The steering control system (3) according to any one of the preceding claims, wherein the flow adjustment assembly (20) has a valve deadband (VDB) and wherein the steering control system (3) is configured to instantaneously command the flow adjustment assembly (3) outside the valve deadband (VDB) to output at least a minimum hydraulic fluid supply (MFS) for the steering cylinder (2) when the toque sensor output (TSO) indicates that the torque applied to the steering input device (10) corresponds to at least a steering torque threshold (STT).

9. The steering control system (3) according to claim 8, wherein the steering control system (3) in configured to command the flow adjustment assembly (20) to increase the hydraulic fluid supply (HFS) to the steering cylinder (2) over the minimum fluid supply (MFS) depending on the torque sensor output (TSO) when the torque sensor output (TSO) indicates that the torque applied to the steering input device (10) is beyond the steerings torque threshold (STT).

10. The steering control system (3) according to any one of the preceding claims, wherein the torque sensor (13, 15) includes a torsion spring (13b) that is configured to by deflected when the operator inputs a torque to the steering input device (10).

11. The steering control system (3) according to any one of the preceding claims, wherein the steering control system (3) includes an electric motor (15) coupled to the steering input device (10), wherein the steering control system (3) is configured to use the electric motor (15) as the torque sensor.

12. The steering control system (3) according to any one of the preceding claims, wherein the steering input device (10) includes at least one of a steering shaft (11, 11A, 11B) and a steering wheel (12), wherein the torque sensor (13, 15) is coupled to the at least one of the steering shaft (11, 11A, 11B) and the steering wheel (12).

13. The steering control system (3) according to any one of claims 1 to 11, wherein the steering input device (10) includes a joystick (18), wherein the torque sensor (13) is coupled to the joystick (10).

14. The steering control system (3) according to any one of the preceding claims, wherein the steering control system (10) is configured to use the torque sensor output (TSO) of the torque sensor (13, 15) as a feed-forward portion in a closed-loop control functionality for controlling the hydraulic fluid supply (MFS) to the steering cylinder (2).

15. A hydraulic steering system (1) for a vehicle, the hydraulic steering system (1) comprising
at least one steering cylinder (2) and
a steering control system (2) according to any one of the preceding claims, wherein the steering cylinder (2) is fluidly connected to the flow adjustment assembly (20).

## Amended claims

### Amended claims in accordance with Rule 137(2) EPC.

1. A steering control system (3) for a hydraulic steering system (1) with a steering cylinder (2),
wherein the steering control system (3) comprises:
a steering input device (10) operable by an operator for inputting steering commands; and
a flow adjustment assembly (20) for controlling hydraulic fluid (HFS) supply to the steering cylinder (2) based on the steering commands, wherein the flow adjustment assembly (20) includes an electrohydraulic valve assembly (22) for electrohydraulic steering and/or a hydraulic steering unit (24) with at least one metering pump (25);
wherein the steering control system (3) comprises a torque sensor (13, 15) for sensing torque applied to the steering input device (10), wherein the steering control system (3) is configured to control the flow adjustment assembly (20) based on a torque sensor output (TSO) of the torque sensor (13, 15),
**characterized in that** the steering control system (3) is capable using the torque sensor output (TSO) and hence the measured torque applied to the steering input device (10) as indicating a steering intention without requiring the steering device (10) to be significantly moved, capturing the steering intention, and taking action on this steering intention.

2. The steering control system (3) according to claim 1, wherein the flow adjustment assembly (20) includes at least one proportional valve (23, 25).

3. The steering control system (3) according to any one of the preceding claims, wherein the steering control system (3) includes an electronic controller that is operatively connected to the flow adjustment assembly (20) and to the torque sensor (13, 15).

4. The steering control system (3) according to any one of the preceding claims, including a movement sensor (13a, 13b, 16) coupled to the steering input device (10) for measuring movements applied to the steering input device (10).

5. The steering control system (3) according to claim 4, wherein the steering control system (3) is configured to operate the flow adjustment assembly (20) based on the torque sensor output (TSO) of the torque sensor in a control deadband for the movement sensor (13a, 13b, 16).

6. The steering control system (3) according to any one of the claims 4 or 5, wherein the steering control system (3) is configured to operate the flow adjustment assembly (20) based on a movement sensor output (MSO) of the movement sensor (13a, 13b, 16) when the movement sensor output (MSO) is indicative of a certain minimum input movement and/or a certain minimum input movement speed of the steering input device (10).

7. The steering control system (3) according to any one of the preceding claims, wherein the flow adjustment assembly (20) has a valve deadband (VDB) and wherein the steering control system (3) is configured to instantaneously command the flow adjustment assembly (20) outside the valve deadband (VDB) to output at least a minimum hydraulic fluid supply (MFS) for the steering cylinder (2) when the toque sensor output (TSO) indicates that the torque applied to the steering input device (10) corresponds to at least a steering torque threshold (STT).

8. The steering control system (3) according to claim 7, wherein the steering control system (3) in configured to command the flow adjustment assembly (20) to increase the hydraulic fluid supply (HFS) to the steering cylinder (2) over the minimum fluid supply (MFS) depending on the torque sensor output (TSO) when the torque sensor output (TSO) indicates that the torque applied to the steering input device (10) is beyond the steerings torque threshold (STT).

9. The steering control system (3) according to any one of the preceding claims, wherein the torque sensor (13, 15) includes a torsion spring (13b) that is configured to by deflected when the operator inputs a torque to the steering input device (10).

10. The steering control system (3) according to any one of the preceding claims, wherein the steering control system (3) includes an electric motor (15) coupled to the steering input device (10), wherein the steering control system (3) is configured to use the electric motor (15) as the torque sensor.

11. The steering control system (3) according to any one of the preceding claims, wherein the steering input device (10) includes at least one of a steering shaft (11, 11A, 11B) and a steering wheel (12), wherein the torque sensor (13, 15) is coupled to the at least one of the steering shaft (11, 11A, 11B) and the steering wheel (12).

12. The steering control system (3) according to any one of claims 1 to 10, wherein the steering input device (10) includes a joystick (18), wherein the torque sensor (13) is coupled to the joystick (18).

13. The steering control system (3) according to any one of the preceding claims, wherein the steering control system (10) is configured to use the torque sensor output (TSO) of the torque sensor (13, 15) as a feed-forward portion in a closed-loop control functionality for controlling the hydraulic fluid supply (MFS) to the steering cylinder (2).

14. A hydraulic steering system (1) for a vehicle, the hydraulic steering system (1) comprising
at least one steering cylinder (2) and
a steering control system (3) according to any one of the preceding claims, wherein the steering cylinder (2) is fluidly connected to the flow adjustment assembly (20).
